# EUROPEAN PATENT APPLICATION

(11) **EP 4 497 531 A2**
(43) Date of publication of application: **29.01.2025**
(21) Application number: 24178149.1
(22) Date of filing: 27.05.2024
(51) Int. Cl.: B23P 6/00, B22F 10/25, B23K 35/02

(54) **METHOD FOR REPAIRING TOOTH OF LABYRINTH SEAL USING ADDITIVE MANUFACTURING**

(30) Priority: 24.07.2023 KR 20230095889
(71) Applicant: Turbo Powertech Co., Ltd., Busan (KR)
(72) Inventor: KANG, Hyun Ki, Busan (KR); BYUN, Sam Sub, Busan (KR); LEE, Jong Yeob, Busan (KR); SON, Jae Wha, Busan (KR)
(74) Representative: Cabinet Chaillot

(57) **Abstract**

The present invention relates to a method for repairing a tooth of a labyrinth seal using 3D printing, the labyrinth seal (100) consisting of an arch-shaped body (110) and teeth (120) protruding from the inner surface as one surface of the arch-shaped body (110), the method including the steps of: removing a damaged tooth (120) from the body (110) of the labyrinth seal (100);depositing a tooth (120) onto the body (110) by means of the 3D printing; and adjusting the surface roughness of the deposited tooth (120) by means of machining.

## Description

### BACKGROUND OF THE INVENTION

### Field of the invention

The present invention relates to a method for manufacturing a turbine labyrinth seal consisting of an arch-shaped body and teeth protruding from one surface of the arch-shaped body, the turbine labyrinth seal being mounted between a turbine rotor as a rotor and a diaphragm as a stator to minimize friction between the turbine rotor and the diaphragm, while the turbine rotor is rotating, so that gas leakage is prevented, while inducing smooth rotation of the turbine rotor, more specifically to a method for repairing a tooth of a labyrinth seal using 3D printing that is capable of removing a damaged tooth by means of machining and meltedly depositing the same material as a body of the labyrinth seal onto the body by means of laser cladding to complete repairing for the tooth, thereby reducing a repairing cost of the tooth.

### Background of the Related Art

Generally, a turbine labyrinth seal prevents high temperature and high pressure gas from leaking from a clearance between a diaphragm as a stator and a turbine rotor as a rotor that are mounted in a turbine casing, while minimizing pressure loss, so that the maximum rotational force is provided to turbine blades, thereby activating a power generator to produce electric power. Accordingly, the turbine labyrinth seal is one of important parts in improving power generation efficiency.

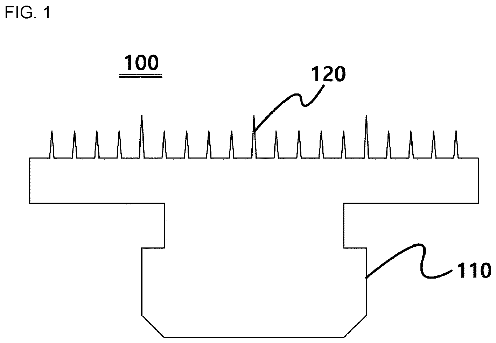

As shown in FIG. 1, a labyrinth seal 100 largely includes a body 110 and teeth 120, and in most cases, the teeth 120 are damaged.

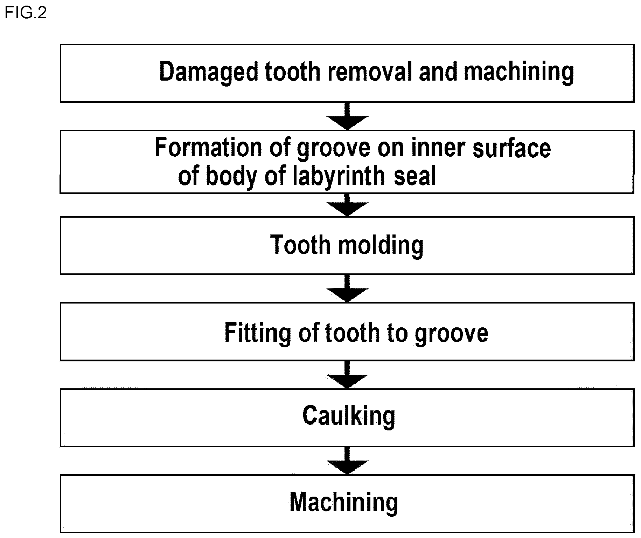

In conventional technologies, as shown in FIG. 2, a damaged tooth is removed by means of machining, and a long groove is formed on the removed tooth of the arch-shaped body 110 in a longitudinal direction of the body 110. Next, a new tooth 120 is inserted into the groove, and the portion of the body 110 coming into contact with the inserted tooth 120 is hit with a tool such as a hammer, so that through such caulking, the tooth 120 is fixed to the body 110.

In this case, the groove is first formed deeply on the inner surface of the body 110 of the labyrinth seal 100 by means of machining, and further, a thin steel plate is cut by means of slitting to prepare a plate material. Next, the plate material is fitted to the groove and subjected to caulking, and after that, the caulked tooth is subjected to machining. As a result, such caulking needs a series of complex processes, thereby undesirably causing a repairing cost of the labyrinth seal tooth to become increased.

Further, fatigue accumulation occurs while the tooth is caulked to the body by means of press-fitting, and since the tooth and the body are not bonded to each other by means of melting, their coupling force becomes weak.

### Prior art literature

### Patent literature

(Patent literature 1) Korean Patent No. 10-0876603 (December 23, 2008)
(Patent literature 2) Korean Patent No. 10-1442739 (September 15, 2014)
(Patent literature 3) Korean Patent No. 10-1449473 (October 2, 2014)
(Patent literature 4) Korean Patent No. 10-1546385 (August 17, 2015)
(Patent literature 5) Korean Patent No. 10-1950924 (February 15, 2019)
(Patent literature 6) Korean Patent No. 10-2293186 (August 18, 2021)

### SUMMARY OF THE INVENTION

Accordingly, the present invention has been made in view of the above-mentioned problems occurring in the related art, and it is an object of the present invention to provide a method for repairing a tooth of a labyrinth seal using 3D printing that is capable of removing a damaged tooth by means of machining, meltedly depositing the same material as a body of the labyrinth seal onto the body by means of laser cladding to complete repairing for the tooth, thereby reducing a repairing cost of the tooth.

To accomplish the above-mentioned object, according to the present invention, there is provided a method for repairing a tooth of a labyrinth seal using 3D printing, the labyrinth seal consisting of an arch-shaped body and teeth protruding from the inner surface as one surface of the arch-shaped body, the method including the steps of: removing a damaged tooth from the body of the labyrinth seal; depositing a tooth onto the body by means of the 3D printing; and adjusting the surface roughness of the deposited tooth by means of machining, wherein the body is seated on top of an arch-shaped jig device, and the jig device comprises an arch-shaped vise for supporting the underside of the body of the arch-shaped labyrinth seal, a rotating part coming into contact with the underside of the vise to rotate the vise, shafts having one end fixed to both ends of the vise in such a way as to extend toward a central portion of the vise to stably support the vise against top of the rotating part, and a central shaft for fixing the shafts thereto.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a sectional view showing a turbine labyrinth seal;
FIG. 2 is a flowchart showing a conventional method for repairing a tooth of a turbine labyrinth seal;
FIG. 3 is a flowchart showing a method for repairing a tooth of a labyrinth seal using 3D printing according to the present invention;
FIG. 4 is a perspective view showing a turbine labyrinth seal according to the present invention; and
FIG. 5 is a schematic view showing a jig device for the turbine labyrinth seal according to the present invention.

### DETAILED DESCRIPTION OF THE PREFERRED EMBODIMENTS

The present invention relates to a method for repairing a tooth of a labyrinth seal using 3D printing, the labyrinth seal consisting of an arch-shaped body and teeth protruding from the inner surface as one surface of the arch-shaped body, the method including the steps of: removing a damaged tooth from the body of the labyrinth seal; depositing a tooth onto the body by means of the 3D printing; and adjusting the surface roughness of the deposited tooth by means of machining.

Metal powder for the tooth deposited onto top of the body comprises carbon (C) in an amount of from 0.01 % by weight to 0.15% by weight, silicon (Si) in an amount of from 0.02% by weight to 0.1% by weight, manganese (Mn) in an amount of not more than 1% by weight, phosphorus (P) in an amount of from 0.01% by weight to 0.05% by weight, sulfur (S) in an amount of not more than 0.03% by weight, chromium (Cr) in an amount of from 15% by weight to 25% by weight, and iron (Fe) as the remainder.

Otherwise, the metal powder for the tooth deposited onto top of the body comprises carbon (C) in an amount of from 0.01% by weight to 0.15% by weight, silicon (Si) in an amount of from 0.02% by weight to 0.1% by weight, manganese (Mn) in an amount of not more than 1% by weight, phosphorus (P) in an amount of from 0.01% by weight to 0.05% by weight, sulfur (S) in an amount of not more than 0.03% by weight, nickel (Ni) in an amount of from 0.01% by weight to 3.25% by weight, chromium (Cr) in an amount of from 15% by weight to 25% by weight, and iron (Fe) as the remainder.

Otherwise, the metal powder for the tooth deposited on top of the body comprises carbon (C) in an amount of from 0.01% by weight to 0.15% by weight, silicon (Si) in an amount of from 0.02% by weight to 0.5% by weight, manganese (Mn) in an amount of not more than 0.6% by weight, phosphorus (P) in an amount of from 0.01% by weight to 0.35% by weight, sulfur (S) in an amount of not more than 0.045% by weight, nickel (Ni) in an amount of from 0.01% by weight to 0.5% by weight, nickel (Ni) in an amount of from 0.01% by weight to 0.5% by weight, copper (Cu) in an amount of from 0.01% by weight to 1.05% by weight, chromium (Cr) in an amount of from 9.05% by weight to 12% by weight, and iron (Fe) as the remainder.

Further, the metal powder for the tooth has a size in the range of 25 to 200 µm.

In the 3D printing process, further, ultrasonic vibrations are applied to the arch-shaped body, and the ultrasonic vibrations are applied in the range of 2 KHz to 100 MHz.

Furthermore, the body is seated on top of an arch-shaped jig device, and the jig device includes an arch-shaped vise for supporting the underside of the body of the arch-shaped labyrinth seal, a rotating part coming into contact with the underside of the vise to rotate the vise, shafts having one end fixed to both ends of the vise in such a way as to extend toward a central portion of the vise to stably support the vise against top of the rotating part, and a central shaft for fixing the shafts thereto.

Further, a laser device, which melts the metal powder and deposits the melted metal powder onto the body, is located above the vise to inject the melted metal powder into the body, so that the melted metal powder is deposited onto top of the body, and simultaneously, if the vise rotates around the central shaft by means of the rotating part, the melted metal powder is deposited in a vertical direction.

Moreover, the laser device has a linear moving part mounted thereon so that the laser device moves in a longitudinal direction of the central shaft, and accordingly, if one line of tooth is formed on top of the body, the laser device moves by a given distance by means of the linear moving part. Next, the vise rotates by means of the rotating part to form a next tooth.

Besides, the arch of the vice has a longer length than the arch of the body of the labyrinth seal, so that the vice has no interference with the deposition of the tooth onto top of the body seated on top thereof.

Hereinafter, a method for repairing a tooth of a labyrinth seal using 3D printing according to the present invention will be explained in detail with reference to the attached drawings.

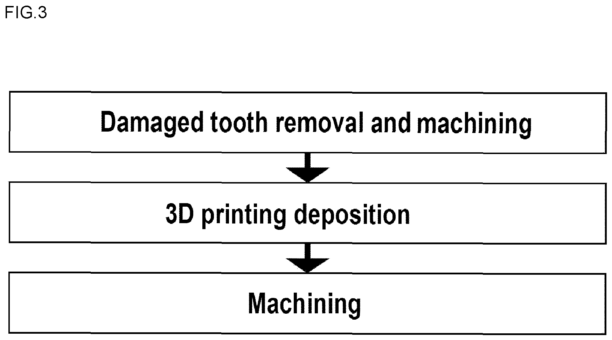

FIG. 3 is a flowchart showing a method for repairing a tooth of a labyrinth seal using 3D printing according to the present invention.

As shown in FIG. 3, a method for repairing a tooth of a labyrinth seal using 3D printing according to the present invention includes the steps of: removing a damaged tooth 120 from a body 110 of the labyrinth seal 100; depositing a tooth 120 onto the body 110 by means of the 3D printing; and adjusting the surface roughness of the deposited tooth 120 by means of machining.

That is, the damaged tooth 120 is removed by means of machining, and next, the same metal powder as the body 110 is melted and deposited onto top of the body 110 to form the tooth 120. After the tooth 120 has been formed, the surface roughness thereof is adjusted by means of machining.

Laser cladding is used for the 3D printing.

In this case, metal powder for the tooth 120 deposited onto top of the body 110 comprises carbon (C) in an amount of from 0.01% by weight to 0.15% by weight, silicon (Si) in an amount of from 0.02% by weight to 0.1% by weight, manganese (Mn) in an amount of not more than 1% by weight, phosphorus (P) in an amount of from 0.01% by weight to 0.05% by weight, sulfur (S) in an amount of not more than 0.03% by weight, chromium (Cr) in an amount of from 15% by weight to 25% by weight, and iron (Fe) as the remainder. Otherwise, the metal powder for the tooth 120 deposited onto top of the body 110 comprises carbon (C) in an amount of from 0.01% by weight to 0.15% by weight, silicon (Si) in an amount of from 0.02% by weight to 0.1% by weight, manganese (Mn) in an amount of not more than 1% by weight, phosphorus (P) in an amount of from 0.01% by weight to 0.05% by weight, sulfur (S) in an amount of not more than 0.03% by weight, nickel (Ni) in an amount of from 0.01% by weight to 3.25% by weight, chromium (Cr) in an amount of from 15% by weight to 25% by weight, and iron (Fe) as the remainder. Otherwise, the metal powder for the tooth 120 deposited onto top of the body 110 comprises carbon (C) in an amount of from 0.01% by weight to 0.15% by weight, silicon (Si) in an amount of from 0.02% by weight to 0.5% by weight, manganese (Mn) in an amount of not more than 0.6% by weight, phosphorus (P) in an amount of from 0.01% by weight to 0.35% by weight, sulfur (S) in an amount of not more than 0.045% by weight, nickel (Ni) in an amount of from 0.01% by weight to 0.5% by weight, nickel (Ni) in an amount of from 0.01% by weight to 0.5% by weight, copper (Cu) in an amount of from 0.01% by weight to 1.05% by weight, chromium (Cr) in an amount of from 9.05% by weight to 12% by weight, and iron (Fe) as the remainder.

Further, ultrasonic vibrations are applied to a base metal to prevent residual stress from being generated from the base metal due to rapid cooling of 10⁴⁻⁵K/s to the base metal when the metal powder is melted during the deposition of the tooth 120 by means of the 3D printing.

The ultrasonic vibrations are applied in the range of 2 KHz to 100 MHz.

To transmit optimal ultrasounds to a deposited portion, a vibrator (not shown) is attached to a position at a distance of 0.5 to 2000 mm from the deposited portion, and accordingly, the ultrasonic vibrations are applied to the body 110 of the labyrinth seal 100 as the base metal, while the deposition is being performed.

That is, the vibrator comes into contact with the surface of the body 110 placed at a distance of 0.5 to 2000 mm from the deposited portion.

If the deposition of the tooth 120 is performed by means of the ultrasonic vibrations and the laser cladding, porosity of the deposited portion is reduced to 0.01% or under and a grain size of the deposited portion is less than 50% of the grain size in the existing laser cladding, thereby advantageously improving mechanical properties (hardness, strength, wear, fatigue, and creep).

In the case of Inconel superalloy having a high melting temperature, a far infrared heater has the wavelength of 10 to 1000 µm to adjust solidification speed of the superalloy so that while the base metal is being kept to a temperature in the range of 25 to 900°C, the deposition is performed by means of the laser cladding.

The labyrinth seal 100 has the shape of the arch, and accordingly, the body 110 also has the shape of the arch.

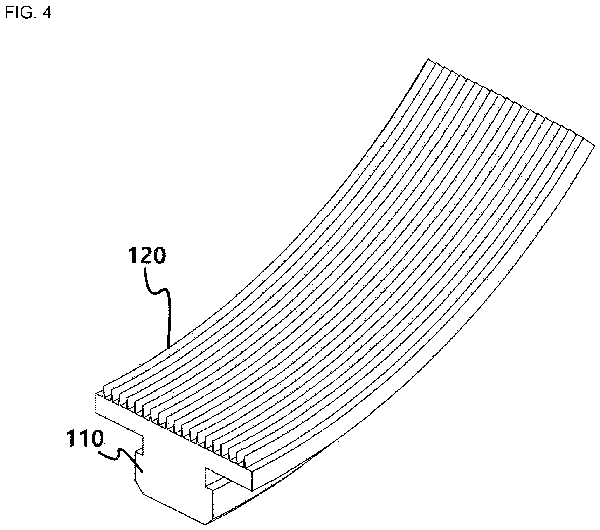

If the melted metal powder is deposited onto top of the labyrinth seal 100 where the tooth 120 is deposited, that is, along the inner periphery of the labyrinth seal 100, as shown in FIG. 4 as will be discussed later, a portion of the deposited, which is not kept horizontal, may be deformed, before the melted metal powder becomes hard, when the melted metal powder is deposited.

To allow the portion where the metal powder is deposited to be formed vertically always on the horizontal level, the jig device 200 for fixing the labyrinth seal 100 thereto is provided.

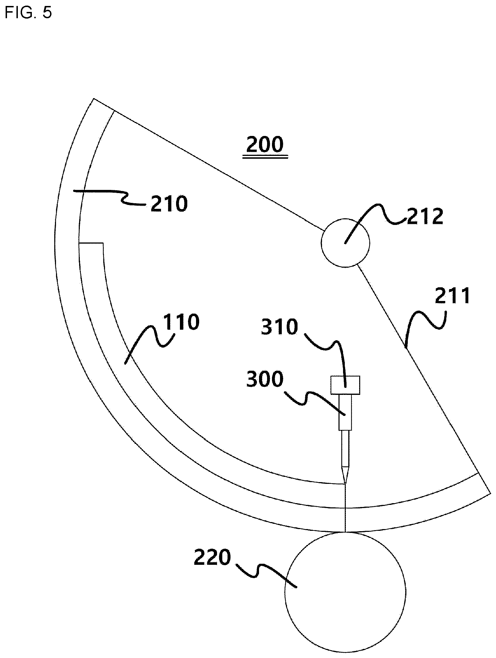

FIG. 4 is a perspective view showing a turbine labyrinth seal according to the present invention, and FIG. 5 is a schematic view showing a jig device for the turbine labyrinth seal according to the present invention.

As shown in FIG. 5, the jig device 200 includes an arch-shaped vise 210 for supporting the underside of the body 110 of the arch-shaped labyrinth seal 100, a rotating part 220 coming into contact with the underside of the vise 210 to rotate the vise 210, shafts 211 having one end fixed to both ends of the vise 210 in such a way as to extend toward a central portion of the vise 210 to stably support the vise 210 against top of the rotating part 220, and a central shaft 213 for fixing the shafts 211 thereto.

Further, a laser device 300, which melts the metal powder and deposits the metal powder onto the body 110, has a linear moving part 310 mounted thereon so that the laser device 300 moves in a longitudinal direction of the central shaft 212.

The linear moving part 310 is a general means widely known, and therefore, an explanation of the linear moving part 310 will be avoided.

Besides, the arch of the vice 210 has a longer length than the arch of the body 110 of the labyrinth seal 100, so that the vice 210 has no interference with the deposition of the tooth 120 onto top of the body 110 seated on top thereof.

The melted metal powder is injected into the body 110 by means of the laser device 300 to deposit the metal powder onto top of the body 110, and further, the vise 210 rotates around the central shaft 212 by means of the rotating part 220, so that the melted metal powder is deposited in a vertical direction.

A widely known means is used as a means for rotatably supporting the central shaft 212 of the vise 210, and therefore, an explanation of the means will be avoided.

In this case, the vice 210 rotates stably by means of the gear engagement between the underside thereof and the rotating part 220.

Further, the tooth 120 is not formed in one column on top of the body 110, and the teeth 120 are formed in a plurality of columns along the width of the body 110. If one line of tooth 120 is formed on top of the body 110, the laser device 300 moves by a given distance by means of the linear moving part 310, and next, the vice 210 rotates by means of the rotating part 220 to form the next line of tooth 120.

In this case, the rotational operation of the rotating part 220 and the moving distance and time of the linear moving part 310 are performed by means of a general electrical/electronic control unit, and therefore, an explanation of the electrical/electronic control unit will be avoided.

As described above, the method for repairing the tooth of the labyrinth seal using 3D printing according to the present invention includes the steps of removing the damaged tooth by means of machining and meltedly depositing the same material as the body onto the body by means of laser cladding to complete the repairing for the tooth, thereby reducing a repairing cost of the tooth. Further, the conventional caulking process where the tooth is caulked to the body by means of press-fitting causes fatigue accumulation due to the press-fitting, and since the tooth and the body are not bonded to each other by means of melting, the coupling force therebetween becomes weak. According to the present invention, however, the materials are melted to each other by means of a laser beam as a heat source, thereby having excellent coupling force.

Additionally, the method for repairing the tooth of the labyrinth seal using 3D printing according to the present invention deposits the metal powder by means of the laser beam, while the origin is shared with one jig device and performs the machining of the deposited metal powder as soon as the deposition is completed, thereby making the repairing process simplified and achieving productivity improvement.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A method for repairing a tooth of a labyrinth seal using 3D printing, the labyrinth seal (100) consisting of an arch-shaped body (110) and teeth (120) protruding from the inner surface as one surface of the arch-shaped body (110), the method including the steps of:
removing a damaged tooth (120) from the body (110) of the labyrinth seal (100);
depositing a tooth (120) onto the body (110) by means of the 3D printing; and
adjusting the surface roughness of the deposited tooth (120) by means of machining,
wherein the body (110) is seated on top of an arch-shaped jig device (200), and the jig device (200) comprises an arch-shaped vise (210) for supporting the underside of the body (110) of the arch-shaped labyrinth seal (100), a rotating part (220) coming into contact with the underside of the vise (210) to rotate the vise (210), shafts (211) having one end fixed to both ends of the vise (210) in such a way as to extend toward a central portion of the vise (210) to stably support the vise (210) against top of the rotating part (220), and a central shaft (213) for fixing the shafts (211) thereto.

2. The method according to claim 1, wherein metal powder for the tooth (120) deposited onto top of the body (110) comprises carbon (C) in an amount of from 0.01% by weight to 0.15% by weight, silicon (Si) in an amount of from 0.02% by weight to 0.1% by weight, manganese (Mn) in an amount of not more than 1% by weight, phosphorus (P) in an amount of from 0.01% by weight to 0.05% by weight, sulfur (S) in an amount of not more than 0.03% by weight, chromium (Cr) in an amount of from 15% by weight to 25% by weight, and iron (Fe) as the remainder.

3. The method according to claim 1, wherein metal powder for the tooth (120) deposited onto top of the body (110) comprises carbon (C) in an amount of from 0.01% by weight to 0.15% by weight, silicon (Si) in an amount of from 0.02% by weight to 0.1% by weight, manganese (Mn) in an amount of not more than 1% by weight, phosphorus (P) in an amount of from 0.01% by weight to 0.05% by weight, sulfur (S) in an amount of not more than 0.03% by weight, nickel (Ni) in an amount of from 0.01% by weight to 3.25% by weight, chromium (Cr) in an amount of from 15% by weight to 25% by weight, and iron (Fe) as the remainder.

4. The method according to claim 1, wherein metal powder for the tooth (120) deposited onto top of the body (110) comprises carbon (C) in an amount of from 0.01% by weight to 0.15% by weight, silicon (Si) in an amount of from 0.02% by weight to 0.5% by weight, manganese (Mn) in an amount of not more than 0.6% by weight, phosphorus (P) in an amount of from 0.01% by weight to 0.35% by weight, sulfur (S) in an amount of not more than 0.045% by weight, nickel (Ni) in an amount of from 0.01% by weight to 0.5% by weight, nickel (Ni) in an amount of from 0.01% by weight to 0.5% by weight, copper (Cu) in an amount of from 0.01% by weight to 1.05% by weight, chromium (Cr) in an amount of from 9.05% by weight to 12% by weight, and iron (Fe) as the remainder.

5. The method according to claim 1, further comprising a laser device (300) located above the vise (210) to inject the melted metal powder into the body (110) so that the melted metal powder is deposited onto top of the body (110), and simultaneously, if the vise (210) rotates around the central shaft (212) by means of the rotating part (220), the melted metal powder is deposited in a vertical direction.

6. The method according to claim 5, wherein the laser device (300) has a linear moving part (310) mounted thereon so that the laser device (300) moves in a longitudinal direction of the central shaft (212), and accordingly, if one line of tooth (120) is formed on top of the body (110), the laser device (300) moves by a given distance by means of the linear moving part (310) to form a next tooth (120), while the vise (210) is rotating by means of the rotating part (220).

7. The method according to claim 1, wherein the arch of the vice (210) has a longer length than the arch of the body (110) of the labyrinth seal (100), so that the vice (210) has no interference with the deposition of the tooth (120) onto top of the body (110) seated on top thereof.
